# EUROPÄISCHE PATENTSCHRIFT

(11) **EP 3 177 835 B1**
(45) Veröffentlichungstag und Bekanntmachung des Hinweises auf die Patenterteilung: **30.10.2024**
(21) Anmeldenummer: 15770790.2
(22) Anmeldetag: 04.08.2015
(51) Int. Cl.: F16D 1/068, F04D 25/06, F04D 29/02, F04D 29/26, F04D 29/32, F04D 29/62, F04D 29/64

(54) **ANORDNUNG EINES LAUFRADS AUF EINEM ELEKTROMOTOR UND VERFAHREN ZUR HERSTELLUNG DER ANORDNUNG**
ASSEMBLY OF AN IMPELLER MOUNTED ON AN ELECTROMOTOR AND MANUFACTURE METHOD OF THE ASSEMBLY
ENSEMBLE D'UNE ROUE DE VENTILATEUR MONTÉE SUR UN ELECTROMOTEUR ET PROCÉDÉ DE FABRICATION DE L'ENSEMBLE

(30) Priorität: 08.08.2014 DE 102014215817
(43) Veröffentlichungstag der Anmeldung: 14.06.2017
(73) Patentinhaber: ZIEHL-ABEGG SE, 74653 Künzelsau (DE)
(72) Erfinder: GAUSS, Tobias, 74646 Niedenrhall (DE); GROSS, Andreas, 74632 Kirchensall (DE); ROESSLER, Stefan, 74538 Rosengarten (DE)
(74) Vertreter: Ullrich & Naumann PartG mbB
(86) Internationale Anmeldenummer: PCT/DE2015/200435
(87) Internationale Veröffentlichungsnummer: WO 2016/019962

(56) Entgegenhaltungen:
- DE-A1- 102005 006 184
- DE-A1- 102008 050 850
- US-A1- 2008 011 266
- US-A1- 2010 215 505
- US-A1- 2011 044 810
- US-A1- 2012 000 418
- US-A1- 2014 183 777

## Beschreibung

Die Erfindung betrifft eine Anordnung eines Laufrads auf einem Elektromotor, insbesondere auf einem Außenläufermotor bzw. Außenläuferrotor, wobei das Drehmoment des Motors auf das Laufrad durch eine drehfeste Verbindung zwischen dem Rotor des Motors und dem Laufrad bzw. dessen Laufradnabe übertragen wird. Des Weiteren betrifft die Erfindung ein Verfahren zur Herstellung einer solchen Anordnung.

Die Begriffe "Laufrad" und "Außenläufermotor" bzw. "Außenläuferrotor" sind im weitesten Sinne zu verstehen. Im Konkreten kann es sich bei dem Laufrad um das Flügelrad (Axiallaufrad) eines Ventilators handeln, wobei das Flügelrad drehfest mit dem Rotor verbunden ist (vgl. DE 10 2011 015 784 A1). Anstelle eines Axiallaufrads kann das Laufrad auch als Radiallaufrad und/oder Diagonallaufrad ausgeführt sein.

Gemäß dem aus der Praxis bekannten Stand der Technik werden die Laufräder (Axiallaufräder und Radiallaufräder) auf einen Motor bzw. Außenläufermotor (EC/AC) aufgepresst, um das Drehmoment des Antriebs, d.h. des Außenläufermotors, auf das Laufrad zu übertragen. Die drehfeste Verbindung zwischen dem Laufrad und dem Rotor wird üblicherweise über eine Presspassung oder eine Verschraubung erzeugt. Bei Realisierung einer Presspassung wird zur sicheren Verbindung eine Blechronde aus Stahl verwendet. Diese wird in einem Folgeverbundwerkzeug hergestellt und vor dem Spritzgussprozess in das Laufradwerkzeug eingelegt. Somit ist ein zusätzliches Teil, nämlich die Blechronde, erforderlich, die einerseits Materialkosten und andererseits Werkzeugkosten aufgrund des besonderen Herstellverfahrens mit sich bringt.

US 2010/215505 A1 offenbart eine Verbindung eines Außläufermotors und einer Laufradnabe, die eine Presspassung und einen Klebstoff kombiniert. Der Klebstoff füllt einen durch Spiel zwischen der Laufradnabe und dem Rotor gebildeten Zwischenraum nur teilweise aus.

Im Lichte der voranstehenden Ausführungen liegt der Erfindung die Aufgabe zugrunde, eine Anordnung der gattungsbildenden Art und ein Verfahren zu deren Herstellung derart auszugestalten und weiterzubilden, dass eine sichere Drehverbindung zwischen einem Laufrad und einem Elektromotor realisierbar ist, ohne zusätzliche Teile und bei einfacher Fertigung.

Die voranstehende Aufgabe ist in Bezug auf die Anordnung durch die Merkmale des Anspruchs 1 und in Bezug auf das Verfahren durch die Merkmale der nebengeordneten Ansprüche 9 und 10 gelöst.

Erfindungsgemäß resultiert die Verbindung des Laufrads mit dem Motor aus physikalischen und/oder chemischen Wechselwirkungen zwischen einem Haftmedium und den einander zugewandten Kontaktflächen der Laufradnabe und des Motors, wobei das Haftmedium einen durch das Spiel zwischen dem Laufrad und dem Motor gebildeten Zwischenraum ausfüllt.

Erfindungsgemäß ist erkannt worden, dass die im Stand der Technik übliche Verwendung einer Blechronde nicht erforderlich ist, dass nämlich eine sichere Verbindung des Laufrads mit dem Motor unter Nutzung physikalischer und/oder chemischer Wechselwirkungen zwischen einem Haftmedium und den einander zugewandten Kontaktflächen der Laufradnabe und des Motors erzeugbar ist. So wird eine unmittelbare sichere Verbindung zwischen dem Laufrad und dem Motor erzeugt, wobei das Haftmedium einen durch das Spiel zwischen dem Laufrad und dem Motor gebildeten Zwischenraum ausfüllt.

Die im Stand der Technik bislang realisierte Verbindungstechnik hat es erforderlich gemacht, neben der Einbindung der Blechronde in das Laufrad, ein möglichst geringes Spiel zwischen dem Motor und dem aufzuziehenden Laufrad bzw. der Laufradnabe zu realisieren, damit die Presspassung wirkt. Die Blechronde sorgt dabei für die mechanische Stabilität bzw. Festigkeit des Laufrads in Umfangs- und Achsrichtung.

In Abwendung von der bewährten Verwendung der Blechronde und unter Überwindung eines Vorurteils der Fachwelt in Bezug auf bloße Klebeverbindungen wird hier bewusst ein Spiel zwischen dem Laufrad und dem Motor akzeptiert, genauer gesagt definiert, welches sich als Zwischenraum zwischen der Innenfläche der Laufradnabe und der Oberfläche des Motors ergibt. Dieser Zwischenraum wird mit dem Haftmedium insgesamt aufgefüllt, so dass eine nahezu spannungsfreie Verbindung zwischen dem Laufrad und dem Motor entsteht, nämlich unter Zwischenschaltung des Haftmediums. Entsprechend ist es nicht erforderlich, die Laufradnabe mittels Metallring oder dergleichen zu stabilisieren. Erfindungsgemäß ist der Zwischenraumals Ringraum ausgebildet.

Der zwischen der Laufradnabe und dem Motor gebildete Zwischenraum kann einen Spalt im Bereich von 0,05 mm bis 3 mm haben, vorzugsweise einen Spalt im Bereich von etwa 0,5 mm. Dieser Spalt muss hinreichend groß sein, damit er in der Lage ist, unter Berücksichtigung der Viskosität des Haftmediums dieses in sich aufzunehmen, und so groß, um die auftretenden Kräfte sicher zu übertragen. Grundsätzlich ist es denkbar, dass das Laufrad ohne besondere Zentrierung auf den Motor aufgebracht und dort mittels Haftmedium befestigt wird. In Ermangelung einer Zentrierung würden jedoch im Betrieb Unwuchten auftreten, denen man durch Auswuchten des Laufrads entgegenwirken müsste. Die Anforderungen an die sogenannte Wuchtgüte hängen vom Gewicht und der maximalen Drehzahl des Laufrads ab.

Erfindungsgemäß sind, zur Vermeidung von Unwuchten, auf der Kontaktfläche der Laufradnabe ein umlaufender Zentriersteg oder mindestens 3, vorzugsweise 5 oder mehr axiale Zentrierstege ausgebildet. Diese Zentrierstege definieren mit einer gedachten Kreisringfläche in etwa den gleichen Durchmesser oder einen kleineren Durchmesser als der Motor, so dass sie sich beim Aufschieben des Laufrads auf den Motor zumindest geringfügig deformieren. Eine Zentrierung mit einem gewissen Form-/Kraftschluss ist dadurch realisiert.

Auch ist es denkbar, dass die Laufradnabe einen von einem kreisringförmigen Innenquerschnitt abweichenden Innenquerschnitt aufweist, bspw. in Form eines Vielecks, Polygons, etc.. Die so gebildeten inneren Bereiche dienen zur Zentrierung auf dem Motor, bilden nämlich die Tangenten an einem gedachten Kreis mit identischem oder zumindest geringfügig kleinerem Innendurchmesser als der Durchmesser des Motors. Die Ecken sind im zusammengebauten Zustand der Anordnung zumindest teilweise mit Haftmedium gefüllt. Auch hier ist in idealer Weise eine Zentrierung geschaffen und gelangt hinreichend viel Haftmedium in den Raum zwischen der Laufradnabe und dem Motor, wobei dieser Raum im weitesten Sinne zu verstehen ist, nämlich mit unterschiedlichen Querschnittsformen. Eine solche Ausführung ist jedoch nicht gemäß der Erfindung.

Erfindungsgemäß ist die Verbindung zwischen der Laufradnabe und dem Haftmedium im Bereich der gesamten Kontaktflächen im Zwischenraum ausgebildet. So ist es denkbar, dass zwischen den Kontaktflächen eine Art Kleberaupen ausgebildet sind. Eine vollflächige Verklebung ist zur Begünstigung der Festigkeit von Vorteil. Auch ist es denkbar, dass die Verbindung zwischen der Laufradnabe und dem Haftmedium nur partiell bzw. zonal im Zwischenraum ausgebildet ist. Eine solche Ausführung ist jedoch nicht gemäß der Erfindung.

Bei dem Haftmedium kann es sich um einen ein-, zwei- oder mehrkomponentigen Klebstoff handeln. Auch der Begriff "Klebstoff" ist im weitesten Sinne zu verstehen. Jedenfalls schafft das generierte Haftmedium eine Verbindung durch Adhäsion und/oder Diffusion und/oder chemische Reaktion gegenüber den Kontaktflächen. In Folge der Verbindung durch reine Adhäsion ist es erforderlich, dass sich zwischen dem Haftmedium und der jeweiligen Oberfläche eine geringere Grenzflächenenergie als die Summe der Oberflächenenergien ergibt. Findet Diffusion, d.h. Materietransport zwischen den Oberflächen und dem Haftmedium statt, wird die Verbindung begünstigt. Gleiches gilt für die chemische Reaktion, bei der Grenzschichten entstehen. Die zuvor genannten Mechanismen können sich gegenseitig ergänzen.

Bei dem Laufrad bzw. einem üblichen Flügelrad handelt es sich regelmäßig um ein Teil aus Kunststoff. Sofern die Oberfläche des Motors nicht aus Kunststoff besteht, kann eine entsprechende Beschichtung vorgesehen sein (auch umgekehrt). Auch ist es denkbar, dass die Kontaktflächen des Motors und/oder der Laufradnabe mit einem die Haftung gegenüber dem Haftmedium begünstigenden Material behandelt oder beschichtet werden. Auch eine mechanische, physikalische oder chemische Behandlung der Kontaktflächen des Motors und/oder der Laufradnabe ist möglich, wonach nämlich die Oberflächen aufgeraut oder profiliert werden. So ist bspw. auch die Nutzung von Drehriefen zur Begünstigung der Haftung denkbar.

In Bezug auf das Einbringen des Haftmediums ist es von Vorteil, wenn die Kontaktfläche der Laufradnabe und/oder des Motors mindestens eine Ausnehmung/Aussparung, vorzugsweise in Form einer segmentierten oder umlaufenden Nut, aufweisen. Diese Ausnehmungen bzw. Aussparungen dienen zur Aufnahme und ggf. Dosierung des Haftmediums während des Zusammenbaus, wobei es im einfachsten Falle möglich ist, die Kontaktflächen mit einem Haftmedium zu beschichten und in diesem Zustand das Laufrad über den Motor zu schieben, wobei im Rahmen einer solchen Ausgestaltung die Ausnehmungen und Aussparungen zur Aufnahme des Haftmediums dienen, um nämlich zu vermeiden, dass das Haftmedium beim Aufziehen nach außen weggeschoben wird.

In ganz besonders vorteilhafter Weise ist mindestens ein in die Ausnehmung oder Aussparung bzw. in Ringraum mündender, vorzugsweise axial verlaufender Zuführkanal für das Haftmedium vorgesehen. Im Rahmen einer solchen Ausgestaltung ist es denkbar, dass das Laufrad auf den Motor aufgeschoben wird, und dass dann durch den Zuführkanal das Haftmedium in den Zwischenraum bzw. Ringraum eingepresst wird, gerade mit einem solchen Volumen, dass es nicht aus dem Zwischenraum nach außen tritt. Die Dosierung ist auf das Volumen des Ringraums abzustimmen.

In weiter vorteilhafter Weise umfasst die Ausnehmung/Aussparung und/oder der Zuführkanal und/oder der Zwischenraum mindestens eine Entlüftung, die auch als Ansaug- bzw. Absaugkanal dienen kann. Die Entlüftung kann in Form eines nach außen führenden Kanals ausgeführt sein. Dabei ist es denkbar, dass das Haftmedium von einem Depot aus über den Zuführkanal in den Zwischenraum hinein gesaugt wird, solange, bis der Zwischenraum insgesamt gefüllt ist. Auch kann über den Ansaugkanal das Hineindrücken des Haftmediums unterstützt bzw. begünstigt werden.

In verfahrensmäßiger Hinsicht ist die zugrundeliegende Aufgabe durch die Merkmale der weiter nebengeordneten Patentansprüche 9 und 10 gelöst.

Anspruch 9 4-6- beansprucht eine einfache Fertigung dahingehend, dass das Laufrad auf den Motor mit zumindest geringem Spiel aufgeschoben wird, wobei das Aufschieben gegen einen die Position der Laufradnabe vorgebenden Anschlag am Motor erfolgen kann.

Vor dem Aufschieben sollte die Kontaktfläche des Motors und/oder die Kontaktfläche des Laufrads gesäubert sein. Auf die gesäuberte Fläche wird das Haftmedium, vorzugsweise beidseitig, zumindest aber auf einer der beiden Kontaktflächen, insgesamt oder bereichsweise aufgebracht, in einer solchen Menge, dass kaum oder kein Haftmedium beim Aufschieben aus dem Zwischenraum austritt.

Erfindungsgemäß wird das Laufrad während des Aufschiebens auf den Motor durch Vorkehrung innerer Rippen bzw. Zentrierstege zentriert. Es ist auch denkbar, dass eine ringförmige Übergangspassung in den Randbereich des Zwischenraums eingesteckt werden, um eine Zentrierung zu schaffen. Eine solche Übergangspassung kann vor, während oder nach dem Aushärten des Haftmediums entfernt werden. Auch könnte die Ubergangspassung in der Anordnung verbleiben. Eine solche Ausführung ist jedoch nicht gemäß der Erfindung. Das Haftmedium härtet über eine Zeitspanne hinweg mit oder ohne Temperatureinwirkung aus.

Im Rahmen einer ganz besonders raffinierten Variante zur Herstellung der erfindungsgemäßen Anordnung wird der Motor von einem Werkstückträger gehalten, vorzugsweise in vertikaler Ausrichtung. Ebenfalls vertikal wird dann das Laufrad auf den Motor aufgeschoben und zwar mit definiertem Spiel, welches den Zwischenraum zwischen dem Laufrad und dem Motor definiert. Die Kontaktflächen von Laufrad und Motor sind vorteilhafterweise vor dem Aufschieben zu säubern.

Erfindungsgemäß erfolgt die Zentrierung des aufgeschobenen Laufrads durch einen auf der Kontaktfläche der Laufradnabe vorgesehenen umlaufenden Zentriersteg oder durch mindestens drei auf der Kontaktfläche der Laufradnabe ausgebildete axiale Zentrierstege.

Erfindungsgemäß ist auf der Kontaktfläche der Laufradnabe mindestens eine ringförmige Dichtfläche oder Dichtlippe ausgebildet, die verhindern soll, dass Haftmedium aus dem Ringraum während des Zusammenbaus herausgeschoben wird.

Das Haftmedium wird vorzugsweise über einen Zuführkanal durch die Flügelradnabe hindurch in den Zwischenraum eingebracht, und zwar in einer solchen Menge dass kein Haftmedium aus dem Zwischenraum austritt. Anschließende Säuberungsarbeiten sind nicht erforderlich.

Wie bereits zuvor ausgeführt, kann das Haftmedium in den Zwischenraum gepresst bzw. gedrückt und/oder gesaugt werden, entsprechend der konstruktiven Vorkehrung. Wesentlich ist jedenfalls, dass der Zwischenraum gerade mit soviel Haftmedium gefüllt wird, wie zum Ausfüllen des Zwischenraums erforderlich ist, so dass eine sichere drehfeste Verbindung zwischen dem Laufrad und dem Rotor - nach Aushärtung - geschaffen ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Flügelrad gemäß Stand der Technik, welches zur Definition der erforderlichen Materialspannung beim Aufpressen mit einer integralen Blechronde ausgestattet ist.
- Fig. 2: in einer schematischen Ansicht, teilweise, ein Laufrad wie in der Darstellung nach Figur 1, jedoch entsprechend der Erfindung ohne Blechronde und
- Fig. 3: in einer schematischen Ansicht die Anordnung des Laufrads auf einem Außenläufermotor, wobei dort der Ringraum zwischen den Kontaktflächen von Laufrad und Außenläufermotor durch Haftmedium aufgefüllt ist.

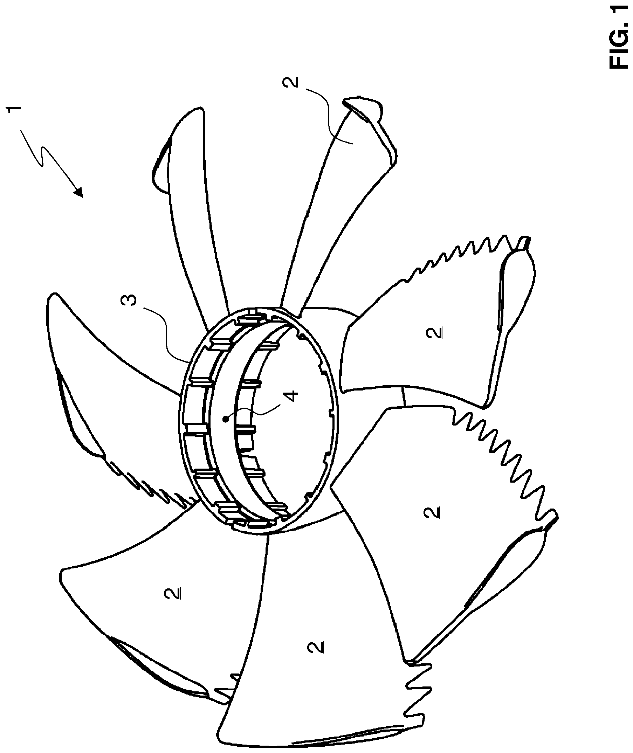

Fig. 1 zeigt in einer schematischen Ansicht die Ausgestaltung eines aus dem Stand der Technik bekannten Laufrads 1, wobei es sich dabei um ein Flügelrad (Axiallaufrad) handelt. Die einzelnen Flügel 2 sind integraler Bestandteil einer Nabe 3, wobei es sich hier insgesamt um ein Spritzgussteil handelt.

Fig. 1 zeigt deutlich, dass die Nabe 3 mit einer Blechronde 4 ausgestattet ist, die der Nabe 3 eine hinreichende Festigkeit zum kraftschlüssigen Aufschieben auf die Außenfläche bzw. Kontaktfläche eines in Fig. 1 nicht gezeigten Außenläufermotors vermittelt. Bei der Blechronde 4 handelt es sich um ein separates Bauteil, welches in einem Folgeverbundwerkzeug hergestellt und vor dem Spritgussprozess des Laufrads 1 in das Laufradwerkzeug eingelegt wird. Die Blechronde 4 schafft die erforderliche Spannung und eine drehfeste Verbindung zwischen dem aufgepressten Laufrad und dem Außenläuferrotor (8) des Außenläufermotors.

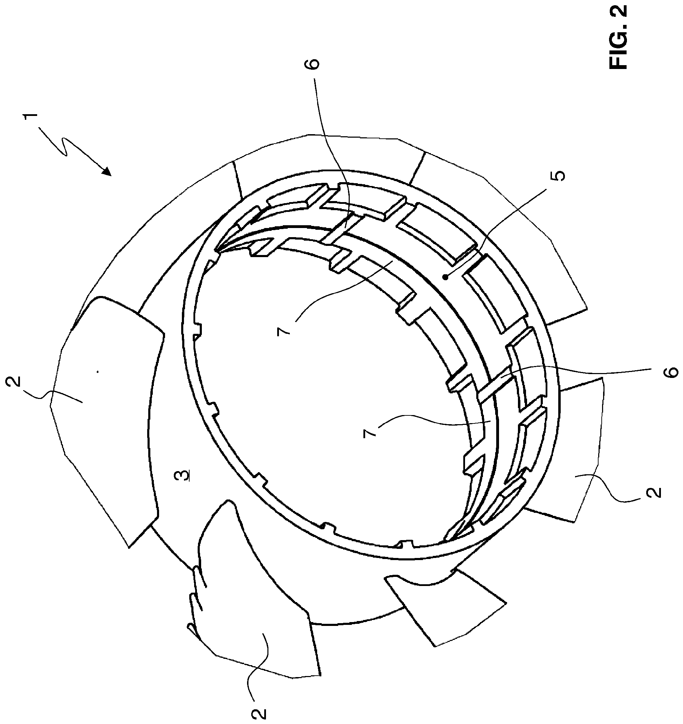

Fig. 2 zeigt das Laufrad 1 einer erfindungsgemäßen Anordnung im Detail. Es unterscheidet sich gegenüber der den Stand der Technik betreffenden Abbildung nach Fig. 1 dadurch, dass keine Blechronde 4 vorgesehen ist. Stattdessen hat das Laufrad 1 gegenüber dem Außenläufermotor 8 einen etwas größeren Innendurchmesser, um nämlich per Spiel einen als Ringraum 9 ausgebildeten Zwischenraum zu schaffen, der zur Aufnahme eines Haftmediums 10 dient. Entsprechend ist das Laufrad 1 gemäß Fig. 2 mit Kontaktflächen 5 ausgestattet, die als Klebeflächen dienen.

Außerdem verfügt das in Fig. 2 gezeigte Laufrad 1 über zur Zentrierung dienende Stege 6 sowie über Dichtflächen 7, die verhindern sollen, dass Haftmedium 10, insbesondere Klebstoff, aus dem Ringraum 9 herausgeschoben wird.

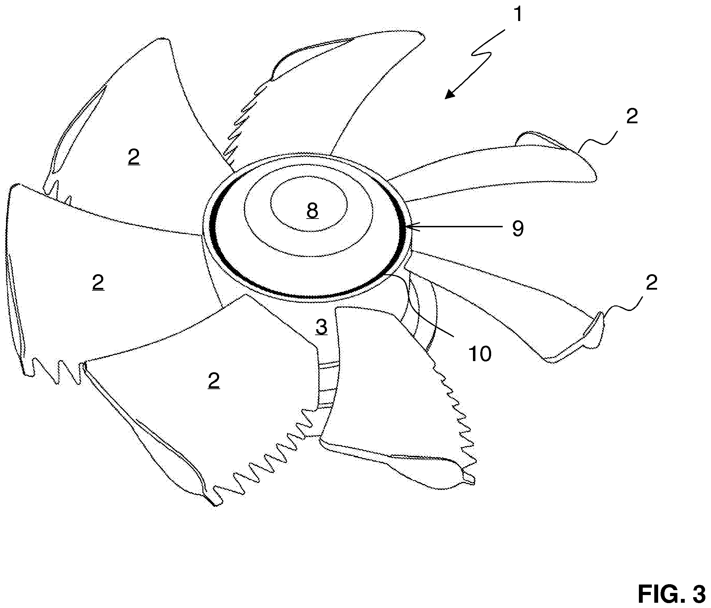

Fig. 3 zeigt in einer schematischen Ansicht die komplette Anordnung des Laufrads 1 auf einem Außenläufermotor 8, wobei dort lediglich angedeutet ist, dass zwischen dem Laufrad 1 und dem Außenläufermotor 8 ein Ringraum 9 gebildet ist, der mit Haftmedium 10, nämlich mit einem geeigneten Klebstoff, aufgefüllt ist. Eine sichere drehfeste Klebeverbindung zwischen dem Laufrad 1 und dem Außenläuferrotor 8 ist geschaffen. Zur Zentrierung dienen die in Fig. 2 gezeigten Stege 6.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt. Die Erfindung ist nämlich ausschließlich durch die beigefügten Ansprüche definiert.

### Bezugszeichenliste

- 1: Laufrad
- 2: Flügel
- 3: Laufradnabe, Nabe
- 4: Blechronde
- 5: Kontaktfläche
- 6: Steg, Zentriersteg
- 7: Dichtfläche
- 8: Rotor (des Motors), Außenläuferrotor (des Außenläufermotors)
- 9: Zwischenraum, Ringraum
- 10: Haftmedium

## Patentansprüche

1. Anordnung eines Laufrades (1) auf einem Außenläufermotor, wobei das Drehmoment des Motors auf das Laufrad (1) durch eine drehfeste Verbindung zwischen einem Rotor (8) des Motors und dem Laufrad (1) bzw. dessen Laufradnabe (3) übertragen wird, wobei die Verbindung des Laufrads (1) mit dem Rotor (8) aus physikalischen und/oder chemischen Wechselwirkungen zwischen einem Haftmedium (10) und den einander zugewandten Kontaktflächen (5) der Laufradnabe (3) und des Rotors (8) resultiert, wobei das Haftmedium (10) einen durch Spiel zwischen der Laufradnabe (3) und dem Rotor (8) gebildeten Ringraum (9) ausfüllt, wobei auf der Kontaktfläche (5) der Laufradnabe (3) ein umlaufender Zentriersteg (6) vorgesehen ist oder auf der Kontaktfläche (5) der Laufradnabe (3) mindestens drei axiale Zentrierstege (6) radial außerhalb des Ringraums (9) ausgebildet sind, wobei der umlaufende Zentriersteg/die axialen Zentrierstege mit einer gedachten Kreisringfläche in etwa den gleichen oder einen kleineren Durchmesser als der Rotor (8) definieren, so dass sie sich beim Aufschieben der Laufradnabe (3) auf den Rotor (8) zumindest geringfügig deformieren und wobei auf der Kontaktfläche (5) der Laufradnabe (3) mindestens eine ringförmige Dichtfläche (7) oder Dichtlippe ausgebildet ist, die verhindern soll, dass Haftmedium (10) aus dem Ringraum (9) während des Zusammenbaus herausgeschoben wird.

2. Anordnung nach Anspruch 1, **dadurch gekennzeichnet, dass** der Ringraum (9) einen Spalt zwischen der Laufradnabe (3) und dem Rotor (8) im Bereich von 0,05 bis 3 mm, vorzugsweise im Bereich von 0,5 mm hat.

3. Anordnung nach Anspruch 1 oder 2, **dadurch gekennzeichnet, dass** der Zentriersteg (6) durch eine Längsnut unterbrochen ist oder dass auf der Kontaktfläche (5) der Laufradnabe (3) vorzugsweise fünf axiale Zentrierstege (6) ausgebildet sind.

4. Anordnung nach einem der Ansprüche 1 bis 3, **dadurch gekennzeichnet, dass** das Haftmedium (10) ein Klebstoff ist, der eine Verbindung durch Adhäsion und/oder Diffusion und/oder chemische Reaktion gegenüber den Kontaktflächen (5) bildet.

5. Anordnung nach einem der Ansprüche 1 bis 4, **dadurch gekennzeichnet, dass** die Kontaktfläche des Rotors (8) und/oder die Kontaktfläche (5) der Laufradnabe (3) mit einem die Haftung gegenüber dem Haftmedium (10) begünstigenden Material behandelt oder beschichtet ist oder beispielsweise durch Beflammen beeinflusst ist.

6. Anordnung nach einem der Ansprüche 1 bis 5, **dadurch gekennzeichnet, dass** die Kontaktflächen (5) des Rotors (8) und/oder der Laufradnabe (3) angeraut ist/sind.

7. Anordnung nach einem der Ansprüche 1 bis 6, **dadurch gekennzeichnet, dass** die Kontaktfläche (5) der Laufradnabe (3) und/oder des Rotors (8) mindestens eine Ausnehmung/Aussparung, vorzugsweise in Form einer segmentierten oder umlaufenden Nut, aufweist/aufweisen, die zur Aufnahme und ggf. Dosierung des Haftmediums (10) während des Zusammenbaus dient/dienen, wobei mindestens ein in die Ausnehmung oder Aussparung bzw. in den Ringraum (9) mündender, vorzugsweise axial verlaufender Zuführkanal für das Haftmedium (10) vorgesehen sein kann.

8. Anordnung nach Anspruch 7, **dadurch gekennzeichnet, dass** die Ausnehmung/Aussparung und/oder der Zuführkanal und/oder der Ringraum (9) mindestens eine Entlüftung oder einen Ansaugkanal, vorzugsweise in Form eines nach außen führenden Kanals, hat/haben.

9. Verfahren zur Herstellung einer Anordnung eines Laufrades (1) auf einem Außenläufermotor, wobei das Drehmoment des Motors auf das Laufrad (1) durch eine drehfeste Verbindung zwischen dem Rotor (8) des Motors und dem Laufrad (1) bzw. dessen Laufradnabe (3) übertragen wird, zur Herstellung einer Anordnung nach einem der Ansprüche 1 bis 8,
**gekennzeichnet durch** folgende Verfahrensschritte:
Bereitstellen eines Außenläufermotors, vorzugsweise vertikal gehalten von einem Werkstückträger;
Aufschieben eines Laufrads (1) auf den Rotor (8) des Außenläufermotors mit zumindest geringem Spiel, vorzugsweise gegen einen die Position der Laufradnabe (3) vorgebenden Anschlag am Rotor (8);
wobei die Kontaktfläche des Rotors (8) und/oder die Kontaktfläche (5) der Laufradnabe (3) ggf. gesäubert und mit einem noch nicht ausgehärteten Haftmedium (10) zumindest bereichsweise derart beschichtet sind, dass kaum oder kein Haftmedium (10) beim Aufschieben aus einem Ringraum (9) zwischen der Laufradnabe (3) und dem Rotor (8) austritt;
Zentrieren der aufgeschobenen Laufradnabe (3) auf dem Rotor (8) mittels des umlaufenden Zentrierstegs (6) oder der mindestens drei axialen Zentrierstege, die sich beim Aufschieben der Laufradnabe (3) auf den Rotor (8) zumindest geringfügig deformieren;
Aushärten des Haftmediums (10), ggf. unter Temperatureinwirkung.

10. Verfahren zur Herstellung einer Anordnung eines Laufrades (1) auf einem Außenläufermotor (8), wobei das Drehmoment des Motors auf das Laufrad (1) durch eine drehfeste Verbindung zwischen dem Rotor (8) des Motors und dem Laufrad (1) bzw. dessen Laufradnabe (3) übertragen wird, zur Herstellung einer Anordnung nach einem der Ansprüche 1 bis 8,
**gekennzeichnet durch** folgende Verfahrensschritte:
Bereitstellen eines Außenläufermotors vorzugsweise vertikal gehalten von einem Werkstückträger;
Aufschieben eines Laufrads (1) auf den Rotor (8) des Außenläufermotors mit zumindest geringem Spiel, vorzugsweise gegen einen die Position der Laufradnabe (3) vorgebenden Anschlag am Rotor (8), wobei die Kontaktflächen (5) der Laufradnabe (3) und des Rotors (8) vorzugsweise gesäubert sind;
Zentrieren der aufgeschobenen Laufradnabe (3) auf dem Rotor (8) mittels des umlaufenden Zentrierstegs (6) oder der mindestens drei axialen Zentrierstege, die sich beim Aufschieben der Laufradnabe (3) auf den Rotor (8) zumindest geringfügig deformieren;
Dosieren des Haftmediums (10) in den Ringraum (9), insbesondere über einen Zuführkanal durch die Laufradnabe (3), vorzugsweise in einer Menge, dass kein Haftmedium (10) aus dem Ringraum (9) austritt;
Aushärten des Haftmediums, ggf. unter Temperatureinwirkung.

11. Verfahren nach Anspruch 10, **dadurch gekennzeichnet, dass** das Haftmedium (10) in den Ringraum (9) gepresst bzw. gedrückt und/oder gesaugt wird.

## Claims

1. Arrangement of an impeller (1) on an external rotor motor (8), whereby the torque of the motor is transferred to the impeller (1) by means of a torsion-proof connection between the rotor (8) of the motor and the impeller (1) and/or its impeller hub (3), whereby the connection of the impeller (1) to the rotor (8) results from physical and/or chemical interactions between an adhesive medium (10) and the contact surfaces (5) of the impeller hub (3) and of the rotor (8), which face each other, whereby the adhesive medium (10) fills an annular space (9) that is formed between the impeller hub (3) and the rotor (8) by a given play, whereby a circumferential centring fin (6) is provided on the contact surface (5) of the impeller hub (3) or at least three axial centring fins (6) radially outside the annular space (9) are provided on the contact surface (5) of the impeller hub (3), whereby the circumferential centring fin/ axial centring fins define an imaginary annular ring surface with approximately the same diameter or a smaller diameter than the rotor (8) such that they are deformed, at least to a small degree, when the impeller hub (3) is being pushed onto the rotor (8) and whereby at least one ring-shaped sealing surface (7) or sealing lip is provided on the contact surface (5) of the impeller hub (3) to prevent the adhesive medium (10) from being pushed out of the annular space (9).

2. Arrangement according to claim 1, **characterized in that** the annular space (9) forms a gap between the impeller hub (3) and the rotor (8) in the range of 0.05 mm to 3 mm, preferably in the range of 0.5 mm.

3. Arrangement according to claims 1 or 2, **characterized in that** the circumferential centring fin (6) is interrupted by a longitudinal groove or preferably five axial centring fins (6) are provided on the contact surface (5) of the impeller hub (3).

4. Arrangement according to claims 1 to 3, **characterized in that** the adhesive medium (10) is a glue that forms a connection to the contact surfaces (5) by means of adhesion and/or diffusion and/or chemical reaction.

5. Arrangement according to claims 1 to 4, **characterized in that** the contact surface of the rotor (8) and/or the contact surface (5) of the impeller hub (3) is treated or coated with a material that promotes the adhesion to the adhesive medium (10) or is impacted, for example, by flame treatment.

6. Arrangement according to claims 1 to 5, **characterized in that** the contact surfaces (5) of the rotor (8) and/or of the impeller hub (3) is/are roughened.

7. Arrangement according to claims 1 to 6, **characterized in that** the contact surface (5) of the impeller hub (3) and/or of the rotor (8) comprise(s) at least one recess/notch, preferably in the form of a segmented or circumferential groove, that serve for accommodating and possibly dosing the adhesive medium (10) during assembly, whereby at least one feeding channel for the adhesive medium (10) that exits into the recess or notch and/or in the annular space (9), preferably extending in axial direction, can be provided.

8. Arrangement according to claim 7, **characterized in that** the recess/notch and/or the feed channel and/or the annular space (9) comprise(s) at least one ventilation or one aspiration channel, preferably in the form of a channel leading outwards.

9. Method for producing an arrangement of an impeller (1) on an external rotor motor, whereby the torque of the motor is transferred to the impeller (1) by means of a torsion-proof connection between the rotor (8) of the motor and the impeller (1) and/or its impeller hub (3), in particular for producing an arrangement according to any one of the claims 1 to 8,
**characterised by** the following procedural steps:
providing an external rotor motor, preferably one held vertically by a workpiece carrier;
pushing an impeller (1) onto the rotor (8) of the external rotor motor with at least a small level of play, preferably against a limit stop on the motor (8) that defines the position of the impeller hub (3);
whereby the contact surface of the rotor (8) and/or the contact surface (5) of the impeller hub (3) are possibly cleaned and coated, at least parts thereof, with a not-yet-cured adhesive medium (10) such that little or no adhesive medium (10) exits from the annular space (9) between the impeller hub (3) and the motor (8), when the impeller is being pushed on;
centring of the pushed-on impeller hub (3) on the rotor (8) by means of the circumferential centring fin (6) or the at least three axial centring fins (6), that is/are deformed, at least to a small degree, when the impeller hub (3) is being pushed onto the rotor (8);
curing of the adhesive medium (10), possibly under the effect of temperature.

10. Method for producing an arrangement of an impeller (1) on an external rotor motor (8), whereby the torque of the motor is transferred to the impeller (1) by means of a torsion-proof connection between the rotor (8) of the motor and the impeller (1) and/or its impeller hub (3), in particular for producing an arrangement according to any one of the claims 1 to 8,
**characterised by** the following procedural steps:
providing an external rotor motor, preferably one held vertically by a workpiece carrier;
pushing an impeller (1) onto the rotor (8) of the external rotor motor with at least a small level of play, preferably against a limit stop on the rotor (8) that defines the position of the impeller hub (3), whereby the contact surfaces (5) of the impeller hub (3) and of the rotor (8) preferably have been cleaned;
centring of the pushed-on impeller hub (3) on the rotor (8) by means of the circumferential centring fin (6) or the at least three axial centring fins (6), that is/are deformed, at least to a small degree, when the impeller hub (3) is being pushed onto the rotor (8);
dosing of the adhesive medium (10) into the annular space (9), in particular by means of a feed channel through the impeller hub (3), preferably in an appropriate amount of such that no adhesive medium (10) exits from the annular space (9);
curing of the adhesive medium, possibly under the effect of temperature.

11. Method according to claim 10, **characterized in that** the adhesive medium (10) is being pressed and/or pushed and/or aspirated into the annular space (9).

## Revendications

1. Agencement d'une roue (1) sur un moteur à rotor externe, le couple du moteur étant transmis à la roue (1) par l'intermédiaire d'une liaison non rotative entre un rotor (8) du moteur et la roue (1) ou son moyeu de roue (3), la liaison de la roue (1) avec le rotor (8) résultant d'interactions physiques et/ou chimiques entre un milieu d'adhérence (10) et les surfaces de contact (5) mutuellement opposées du moyeu de roue (3) et du rotor (8), le milieu d'adhérence (10) remplissant un espace annulaire (9) formé par le jeu entre le moyeu de roue (3) et le rotor (8), une nervure de centrage circonférentielle (6) étant prévue sur la surface de contact (5) du moyeu de roue (3) ou au moins trois nervures de centrage axiales (6) étant formées radialement à l'extérieur de l'espace annulaire (9) sur la surface de contact (5) du moyeu de roue (3), la nervure de centrage circonférentielle/les nervures de centrage axiales avec une surface annulaire circulaire projetée définissant approximativement le même diamètre ou un diamètre plus petit que celui du rotor (8), de sorte qu'elles se déforment au moins de manière minime lorsque le moyeu de la roue (3) est poussé sur le rotor (8) et au moins une surface d'étanchéité annulaire (7) ou lèvre d'étanchéité est formée sur la surface de contact (5) du moyeu de roue (3), destinée à empêcher que le milieu d'adhérence (10) ne soit poussé hors de l'espace annulaire (9) lors du montage.

2. Agencement selon la revendication 1, **caractérisé en ce que** l'espace annulaire (9) présente un espace entre le moyeu de roue (3) et le rotor (8) compris entre 0,05 et 3 mm, de préférence 0,5 mm.

3. Agencement selon la revendication 1 ou 2, **caractérisé en ce que** la nervure de centrage (6) est interrompue par une rainure longitudinale ou **en ce que**, de préférence, cinq nervures de centrage axiales (6) sont formées sur la surface de contact (5) du moyeu de roue (3).

4. Agencement selon l'une des revendications 1 à 3, **caractérisé en ce que** le milieu d'adhérence (10) est un adhésif qui forme une liaison par adhésion et/ou diffusion et/ou réaction chimique contre les surfaces de contact (5).

5. Agencement selon l'une des revendications 1 à 4, **caractérisé en ce que** la surface de contact du rotor (8) et/ou la surface de contact (5) du moyeu de roue (3) est traitée ou revêtue d'un matériau favorisant l'adhérence au milieu d'adhérence (10) ou est influencée, par exemple, par un traitement à la flamme.

6. Agencement selon l'une des revendications 1 à 5, **caractérisé en ce que** les surfaces de contact (5) du rotor (8) et/ou du moyeu de roue (3) sont rendues rugueuses.

7. Agencement selon l'une des revendications 1 à 6, **caractérisé en ce que** la surface de contact (5) du moyeu de roue (3) et/ou du rotor (8) présente au moins un évidement/une cavité, de préférence sous la forme d'une rainure segmentée ou circonférentielle, qui sert à recevoir et, le cas échéant, à doser le milieu d'adhérence (10) lors du montage, au moins un canal d'alimentation, s'étendant de préférence axialement pour le milieu d'adhérence (10), débouchant dans l'évidement ou la cavité ou dans l'espace annulaire (9).

8. Agencement selon la revendication 7, **caractérisé en ce que** l'évidement/la cavité et/ou le canal d'alimentation et/ou l'espace annulaire (9) présente(nt) au moins un évent ou un canal d'aspiration, de préférence sous la forme d'un canal menant au dehors.

9. Procédé pour produire un agencement de roue (1) sur un moteur à rotor externe, le couple du moteur étant transmis à la roue (1) par une liaison non rotative entre le rotor (8) du moteur et la roue (1) ou à son moyeu de roue (3) afin de fabriquer un agencement selon l'une des revendications 1 à 8,
**caractérisé par** les étapes de processus suivantes :
mettre à disposition un moteur à rotor externe, de préférence maintenu verticalement par un porte-pièce à usiner ;
pousser une roue (1) sur le rotor (8) du moteur à rotor externe avec au moins peu de jeu, de préférence contre une butée sur le rotor (8) qui détermine la position du moyeu de roue (3) ;
la surface de contact du rotor (8) et/ou la surface de contact (5) du moyeu de roue (3) étant éventuellement nettoyées et revêtues au moins par endroits d'un milieu d'adhérence (10) qui n'a pas encore durci de telle sorte qu'il ne reste que peu ou pas de milieu d'adhérence (10) lorsqu'il est poussé et sort d'un espace annulaire (9) entre le moyeu de roue (3) et le rotor (8) ; centrage du moyeu de roue (3) poussé sur le rotor (8) au moyen de la nervure de centrage circonférentielle (6) ou des au moins trois nervures de centrage axiales qui se déforment au moins de manière mineure lorsque le moyeu de roue (3) est poussé sur le rotor (8) ;
durcissement du milieu d'adhérence (10), si nécessaire sous l'influence de la température.

10. Procédé pour fabriquer un agencement d'une roue (1) sur un moteur à rotor externe (8), le couple du moteur étant transmis à la roue (1) par une liaison non rotative entre le rotor (8) du moteur et la roue (1) ou son moyeu de roue (3) afin de fabriquer un agencement selon l'une des revendications 1 à 8, **caractérisé par** les étapes de processus suivantes :
mettre à disposition un moteur à rotor externe, de préférence maintenu verticalement par un porte-pièce à usiner ;
pousser une roue (1) sur le rotor (8) du moteur à rotor externe avec au moins un peu de jeu, de préférence contre une butée du rotor (8) qui détermine la position du moyeu de roue (3), les surfaces de contact (5) du moyeu de roue (3) et du rotor (8) étant de préférence nettoyées ; centrer le moyeu de roue (3) poussé sur le rotor (8) au moyen de la nervure de centrage circonférentielle (6) ou des au moins trois nervures de centrage axiales qui se déforment au moins de manière minime lorsque le moyeu de roue (3) est poussé sur le rotor (8) ;
doser le milieu d'adhérence (10) dans l'espace annulaire (9), en particulier via un canal d'alimentation à travers le moyeu de roue (3), de préférence de manière à faire en sorte qu'aucun milieu d'adhérence (10) ne sorte de l'espace annulaire (9) ;
durcir le milieu d'adhérence, si nécessaire sous l'influence de la température.

11. Procédé selon la revendication 10, **caractérisé en ce que** le milieu d'adhérence (10) est pressé ou imprimé et/ou aspiré dans l'espace annulaire (9).
